# EUROPÄISCHE PATENTSCHRIFT

(11) **EP 2 345 607 B1**
(45) Veröffentlichungstag und Bekanntmachung des Hinweises auf die Patenterteilung: **05.06.2013**
(21) Anmeldenummer: 11150019.5
(22) Anmeldetag: 03.01.2011
(51) Int. Cl.: B65G 19/02, B65G 47/61, B65G 9/00, B61B 10/02

(54) **Rollläufer und Hängeförderanlage mit Rollläufern**
Trolley and overhead transport assembly with such trolleys
Chariot de transport suspendu et installation de transport suspendu dotée de tels chariots

(30) Priorität: 13.01.2010 DE 102010000064
(43) Veröffentlichungstag der Anmeldung: 20.07.2011
(73) Patentinhaber: psb intralogistics GmbH, 66955 Pirmasens (DE)
(72) Erfinder: Dietz, Lothar, 66999, Hinterweidenthal (DE); Neuber, Wolfgang, 66504, Bottenbach (DE); Hartig, Uwe, 66802, Überherrn (DE)
(74) Vertreter: Viering, Jentschura & Partner

(56) Entgegenhaltungen:
- EP-A1- 0 400 702
- EP-A1- 1 544 136
- EP-A1- 1 645 189
- DE-B3-102006 049 754
- DE-U1- 9 217 954
- FR-A1- 2 142 980
- US-A- 3 074 356
- US-A- 3 807 314
- US-A- 5 897 004

## Beschreibung

Die Erfindung betrifft einen Rollläufer gemäß dem Oberbegriff von Anspruch 1.

Die Erfindung betrifft einen Rollläufer (auch "Trolley" genannt) zum hängenden Transport eines Objekts, wie z.B. eines Kleiderbügels mit z.B. einer am Kleiderbügel hängenden Textilware, entlang z.B. einer Führungsschiene, an, d.h. z.B. auf oder in, welcher der Rollläufer rollend gelagert ist. Ferner betrifft die Erfindung eine Hängeförderanlage mit Rollläufern sowie ein Verfahren zum Anhängen eines Eingriffstücks eines Objekts an einen Rollläufer.

Ein Rollläufer der eingangs genannten Art ist z.B. aus der DE 92 17 954 U1 bekannt.

Durch die Erfindung wird ein Rollläufer geschaffen, welcher einen einfachen und damit kostengünstigen Aufbau hat und an welchem zu transportierende Objekte einfach und sicher angehängt werden können.

Durch die Erfindung wird hierzu ein Rollläufer gemäß Anspruch 1 bereitgestellt. Ferner werden durch die Erfindung eine Hängeförderanlage gemäß Anspruch 9 und ein Verfahren gemäß Anspruch 12 bereitgestellt. In den sonstigen abhängigen Ansprüchen sind noch weitere Ausführungsformen der Erfindung beschrieben.

Indem gemäß dem Rollläufer nach Anspruch 1 der Aufhängerkorpus, an dessen Hänge-Öse das zu transportierende Objekte angehängt werden kann, einseitig von einer Seite her an der Rolle bzw. an deren Achse angebracht ist, entfällt ein zweiter, auf der anderen Rollenseite von der Rolle zur Hänge-Öse verlaufender Haltearmstrang, wodurch die Korpusgröße und damit der Materialaufwand für den Aufhängerkorpus verringert wird. (D.h., es ist nur auf einer Seite des Aufhängerkorpus eine Rolle vorgesehen, wobei auf dieser einzigen Seite z.B. nur eine einzige Rolle vorgesehen sein kann). Ferner kann der Korpus auch mit seiner frei vom Korpus ab- oder vorstehenden Rolle leicht in einen zur Seite hin offenen Führungskanal einer Führungsschiene eingesetzt werden. Eventuelle Gewichts-Asymmetrien bezüglich der Rolle können bei Bedarf z.B. dadurch ausgeglichen werden, dass die Hänge-Öse z.B. gegen die Rolle zu der anderen Rollenseite hin etwas versetzt angeordnet ist oder dass sich ein Gewicht ausgleichender Teil des Aufhängerkorpus auf der anderen Rollenseite erstreckt (siehe z.B. auch Ausführungsform von Anspruch 3) oder auch dass ein separates Gegengewicht vorgesehen wird, z.B. an der Achse der Rolle auf deren anderen Rollenseite.

Die einseitige Anbringung des Aufhängerkorpus an der Rolle umfasst, dass sich von der Rolle aus in der Regel nur ein Haltearm des Korpus zur Hänge-Öse hin erstreckt, wobei die Hänge-Öse am freien Endabschnitt dieses einen Haltearms ausgebildet oder dort angebracht ist.

Die einseitige Anbringung des Aufhängerkorpus umfasst ferner, dass aufgrund der dadurch bedingten verringerten Korpusgröße bzw. Korpusabmessungen, die Zugänglichkeit zu der Hänge-Öse erleichtert ist, wodurch Objekte mit ihren Eingriffstücken leichter in die Hänge-Öse eingehängt werden können. Der Aufhängerkorpus ist z.B. aus einem Stück integral geformt, z.B. in Form eines Kunststoffspritzgussteils. Er kann jedoch auch aus einem anderen Material, wie z.B. Metallmaterial, sein, und er kann auch mehrteilig aufgebaut sein. Die Rolle ist z.B. aus Kunststoff oder Metall. Die Rollenachse kann eine mit der Rolle einstückig ausgebildete Achse sein, die sich relativ zu dem Aufhängerkorpus mit der Rolle mitdreht. Die Rollenachse kann auch am Aufhängerkorpus ausgebildet sein, z.B. einstückig daran ausgeformt sein, wobei sich dann die Rolle relativ zu der am Aufhängerkorpus festgelegten Rollenachse dreht. Die Rolle steht z.B. auf der dem Aufhängerkorpus abgewandten, anderen Rollenseite frei vom Aufhängerkorpus ab, sodass sie einfach seitlich in ein zugehöriges, zur Seite hin offenes Schienenprofil, wie z.B. ein C-Profil oder ein zur Seite hin weisendes U-Profil, einsetzbar ist.

Das Einhängen des Eingriffstücks des jeweiligen Objekts erfolgt z.B. von jener einen Rollenseite her, von welcher her auch der Korpus an der Rolle befestigt ist. Prinzipiell ist aber auch ein Einhängen des Eingriffstücks von der anderen Rollenseite her möglich.

Objekte sind z.B. Kleiderbügel mit daran hängenden Textilien, wobei das jeweilige Eingriffstück von einem Hakenteil des Kleiderbügels gebildet wird. Objekte können jedoch auch andere Artikel sein, wie z.B. Aufhänger, an welchen z.B. Metall- und/oder Kunststoffwaren, wie z.B. Fahrräder, Kästen mit Warenteilen wie Maschinenelementen und ähnliche Waren angehängt sein können, wobei die Aufhänger ebenfalls zum Beispiel Hakenteile als Eingriffstücke zum Eingriff in die Hänge-Öse aufweisen.

Die Rollläufer laufen z.B. an (z.B. in oder auch auf) den Führungsschienen eines Schienensystems einer Hängeförderanlage, wobei das Schienensystem mit Weichen, Einschleusstellen und Ausschleusstellen zum Einschleusen bzw. Ausschleusen von Rollläufern in einen Transportschienenkreislauf des Schienensystems aufweisen kann.

Eine Mitnehmervorrichtung ist z.B. in Form eines parallel entlang der Führungsschienen verlaufenden Mitnehmerstrangs, z.B. in Form eines Kettenstrangs, ausgebildet, an welchem quer zum Mitnehmerstrang bewegbare Mitnehmer angebracht sind, welche an dem Mitnahmeabschnitt des jeweiligen Rollläufers angreifen können, um diesen in die Bewegungsrichtung des Mitnehmerstrangs mitzunehmen. Die Bewegbarkeit der Mitnehmer quer zu dem Mitnehmerstrang ermöglicht es den Mitnehmern, aneinander angereihte oder aufgestaute Rollläufer zu überlaufen und z.B. dann nur den letzten Rollläufer einer solchen Gruppe von aneinandergereihten Rollläufern wieder mit zu nehmen. Ein Antriebsstrang mit quer dazu auslenkbaren Mitnehmern, der als Mitnehmervorrichtung zum Mitnehmen von Rollläufern gemäß dieser Erfindung eingesetzt werden kann, ist z.B. in der EP 2 128 051 A1 beschrieben.

Bei dem Rollläufer gemäß Anspruch 2, welcher ebenfalls in der wie vorstehend beschriebenen Weise ausgebildet und betrieben sein kann, ist das In-Eingriff-Bringen des Eingriffstücks eines Objekts mit der Hänge-Öse weiter vereinfacht möglich, indem das Eingriffstück lediglich nur durch eine Vertikalbewegung in die Hänge-Öse eingreifen kann. Dies erlaubt es z.B. in einfacher Weise, die Objekte geschwindigkeitssynchronisiert neben den Rollläufern mit zu bewegen und das jeweilige Eingriffsstück in horizontale (in Richtung der Rollenachse sowie in Richtung quer zur Rollenachse) Überlappung bzw. Flucht mit der Ösen-Öffnung zu bringen, noch bevor das Eingriffstück in die Hänge-Öse bzw. in deren Ösen-Öffnung eingreift. Hierbei kann das Herstellen der horizontalen Flucht zwischen dem Eingriffstück und der Hänge-Öse gleichzeitig oder auch in voneinander separaten Schritten durchgeführt werden. Letztlich muss das Eingriffstück nur noch vertikal nach unten in den Eingriff mit der Hänge-Öse bewegt werden. Das Eingriffstück kann bei dieser Ausführungsform aber auch über kombinierte Bewegungsabläufe mit der Hänge-Öse in Eingriff gebracht werden, wie z.B. nach erfolgter Ausrichtung des Eingriffstücks zur Hänge-Öse in Laufrichtung des Rollläufers quer zur Rollenachse durch eine Schrägbewegung/kombinierte Bewegung zur Seite in Richtung der Rollenachse und quer dazu vertikal nach unten in die Hänge-Öse 13 hinein oder auch nach erfolgter Ausrichtung des Eingriffstücks zur Hänge-Öse in Richtung der Rollenachse durch eine Schrägbewegung/kombinierte Bewegung in Laufrichtung des Rollläufers quer zur Rollenachse und nach unten in die Hänge-Öse hinein. Hierdurch ergeben sich mehr Möglichkeiten für die Gestaltung des Eingriffsvorgangs, und der Eingriffsvorgang kann insgesamt erleichtert und zuverlässiger gestaltet werden.

Die Ösen-Öffnung, d.h. die Ösen-Öffnungsfläche, kann sich z.B. horizontal oder aber auch gegen die Vertikale geneigt bzw. schräg erstrecken.

Bei der Ausführungsform von Anspruch 3 können sich der erste Steg und der dritte Steg zum Beispiel vertikal oder schräg zur Vertikalen erstrecken. Der zweite und der vierte Steg können sich horizontal oder schräg zur Horizontalen erstrecken.

Durch die Ausführungsform von Anspruch 4 ist das Ausrichten des Eingriffstücks zur Hänge-Öse in Laufrichtung des Rollläufers (= quer zur Rollenachse) vereinfacht, da die V- oder U- Form mit in Laufrichtung des Rollläufers sich erstreckender Distanz zwischen den V- oder U-Schenkeln einen gewissen Spielraum für die Ausrichtung lässt. Das heißt, das Eingriffstück kann sicherer von der Hänge-Öse gefangen werden.

Die Hänge-Öse umfasst also solch eine Art Haltebügelabschnitt, an welchem das Eingriffstück letztlich hängt, wobei ein freier Endabschnitt des Eingriffstücks die Hänge-Öse durchgreift. Dieser Haltebügelabschnitt ist z.B. vertikal zu der Rolle ausgerichtet oder fluchtend angeordnet, sodass die Hängeware, d.h. das zu transportierende Objekt, einfacher mit seinem Schwerpunkt fluchtend unter der Rolle angeordnet werden kann.

Der langgestreckte Mitnahmeabschnitt oberhalb der Rolle erlaubt in einfacher Weise ein Ausschleusen- und Einschleusen von Rollläufern aus/von bzw. in/auf eine Führungsschiene, da der einer Führungsschiene zugeordnete Mitnehmer noch eine längere Zeit an dem Rollläufer angreifen kann, selbst wenn letzterer z.B. aus dieser dem Mitnehmer zugeordneten Führungsschiene quer zu dieser ausgeschleust wird. Ebenso kann beim Einschleusen eines Rollläufers in eine Führungsschiene z.B. ein Mitnehmer schon an dem Rollläufer angreifen, noch bevor der Rollläufer komplett auf die diesem Mitnehmer zugeordnete Führungsschiene eingeschleust ist.

Bei der jeweiligen Ausführungsform ist am ersten Steg des Aufhängerkorpus zum Beispiel ein Identifikationsmittel angebracht, z.B. in Form eines Magneten, einer Farbkodierung, eines Strichkodes, eines Matrixkodes, eines RFID-Chips oder eines anderen derartigen Mittels. Das Identifikationsmittel umfasst Informationen, die den zugehörigen Rollläufer identifizierbar machen, sodass der jeweilige Rollläufer innerhalb der Hängeförderanlage mit Hilfe eines dem Identifikationsmittel zugeordneten Lesegeräts erkannt werden kann, um ihn innerhalb des Transportsystems gesteuert bewegen und mit Objekten beladen bzw. entladen zu können. Das Identifikationsmittel ist z.B. an der von der Rolle abgewandten Außenseite des ersten Stegs angebracht.

Um bei dem erfindungsgemäßen Rollläufer mit vertikal verlaufender Hänge-Öse (Öffnungsfläche der Hänge-Öse erstreckt sich vertikal), das Eingriffstück des Objekts leichter in Eingriff mit und/oder außer Eingriff von der Hänge-Öse bringen zu können, ist erfindungsgemäß ferner eine Anhäng- und/oder Abhängeinrichtung zum Anhängen und/oder Abhängen von Objekten an und/oder von Rollläufern bereit gestellt, welche aufweist ein um eine Rotationsachse drehbares Rotationsteil, z.B. in Form einer Drehscheibe oder einer Drehtrommel, an welchem ein oder mehrere in Umfangsrichtung des Rotationsteils im Winkelabstand voneinander angeordnete Aufnahmeteile über eine Gelenkachse gelenkig angebracht ist/sind. Das jeweilige Aufnahmeteil kann damit mit der Rotationsbewegung des Rotationsteils mitrotieren. Die Gelenkachse des jeweiligen Aufnahmeteils verläuft parallel zur Rotationsachse des Rotationsteils, und das jeweilige Rotationsteil kann den jeweiligen Rollläufer derart darin aufnehmen, dass der jeweilige Rollläufer bezüglich der Gelenkachse und der Rotationsachse relativ zu dem jeweiligen Aufnahmeteil im Wesentlichen drehfest ist, sodass er mit dem Aufnahmeteil um dessen Gelenkachse relativ zum Rotationsteil mitdrehbar ist. Die Anhäng- und/oder Abhängeinrichtung weist ferner eine stationäre Kurvenführung oder Kulissenführung auf, in welche ein am Aufnahmeteil oder am Rollläufer ausgebildetes Eingriffsteil bei der Rotation des Rotationsteils eingreifen kann, um das jeweilige Aufnahmeteil mit dem jeweiligen darin aufgenommenen Rollläufer relativ zum Rotationsteil in eine Aufschwenkposition zu schwenken, in welcher das anzuhängende Objekt mit seinem Eingriffstück in Eingriff mit der Hänge-Öse bringbar ist.

Die Gelenkachse kann in jeder eine gelenkige Verbindung zwischen dem Aufnahmeteil und dem Rotationsteil schaffenden Weise ausgebildet sein, z.B. auch in Form eines Filmscharniers oder eines Kugelgelenks.

Zum Einschleusen und/Ausschleusen von Objekten in den bzw. aus dem Förderstrang/Transportstrang, der von den entlang des Schienensystems der Hängeförderanlage mitnehmbaren Rollläufern gebildet wird, kann die vorstehend erläuterte Anhäng- und/oder Abhängeinrichtung wie folgt eingesetzt werden. Die Rollläufer werden über das Schienensystem an das jeweilige Aufnahmeteil herangeführt und auf dieses überführt. Durch den erläuterten Kurvenführungs- bzw. Kulissenmechanismus wird der jeweilige Rollläufer von einer vertikalen Transportposition im Transportstrang in seine Aufschwenkposition aufgeschwenkt, in welcher dann z.B. eine sich vorab vertikal erstreckende Hänge-Öse schräg zur Vertikalen steht, sodass ein Eingriffstück einfach vertikal von oben her in die Hänge-Öse eingreifen kann. Anschließend wird entweder das Rotationsteil wieder zurückgedreht oder das Rotationsteil wird einfach weiter gedreht, wobei die Kurvenführung sich derart weiter erstreckt, dass der im Aufnahmeteil aufgenommene Rollläufer wieder in seine vertikale Transportposition geschwenkt wird, um dann wieder in das Schienensystem der Hängeförderanlage zurück überführt zu werden.

Ein sich nur in eine Richtung drehendes Rotationsteil wird z.B. verwendet, wenn mehrere Aufnahmeteile daran vorgesehen sind. Damit können im durchgehenden Umlaufbetrieb ständig neue Aufnahmeteile mit Rollläufern bestückt und in Eingriff mit der Kurvenführung gebracht werden, um dann Objekte an den Rollläufer anzuhängen oder abzuhängen.

Der jeweilige Rollläufer bzw. sein Aufhängerkorpus mit der Rollenachse werden z.B. um einen Winkel zwischen 0° und 90° oder z.B. zwischen 15° und 45 in die Aufschwenkposition aufgeschwenkt.

Die Erfindung wird im Folgenden anhand von Ausführungsbeispielen mit Bezugnahme auf die Erfindung erläutert. In der Zeichnung zeigen:
Figur 1 eine Frontansicht eines Rollläufers gemäß einem ersten Ausführungsbeispiel der Erfindung, mit daran angehängtem Objekt,
Figuren 2 und 3 eine Seitenansicht bzw. eine perspektivische Ansicht des Rollläufers von Figur 1,
Figuren 4, 5, 6 und 7 eine Frontansicht, eine Seitenansicht, eine Draufsicht bzw. eine perspektivische Ansicht eines Rollläufers gemäß einem zweiten Ausführungsbeispiel der Erfindung,
Figuren 8 und 9 eine Seitenansicht bzw. eine Frontansicht eines Rollläufers gemäß einem dritten Ausführungsbeispiel der Erfindung mit schwenkbarer Hänge-Öse im Nichtausschwenk-Zustand,
Figuren 10, 11 und 12 eine Seitenansicht, eine Frontansicht bzw. eine perspektivische Ansicht des Rollläufers von Figuren 8 und 9 mit der schwenkbaren Hänge-Öse im Ausschwenk-Zustand.
Figuren 13 und 14 eine Frontansicht bzw. eine Seitenansicht gemäß einem vierten Ausführungsbeispiel der Erfindung,
Figuren 15a und 15b eine Seitenansicht bzw. eine Frontansicht eines fünften Ausführungsbeispiels der Erfindung mit der Hänge-Öse im Beladungszustand,
Figuren 16a und 16b eine Seitenansicht bzw. eine Frontansicht des fünften Ausführungsbeispiels von Figuren 15a und 15b mit der Hänge-Öse im Entladungszustand,
Figuren 17a und 17b eine Seitenansicht bzw. eine Frontansicht eines sechsten Ausführungsbeispiels der Erfindung mit der Hänge-Öse im Beladungszustand und
Figuren 18a und 18b eine Seitenansicht bzw. eine Frontansicht eines siebten Ausführungsbeispiels der Erfindung mit der Hänge-Öse im Entladungszustand.
Figuren 19a und 19b zwei Frontansichten einer Anhäng- und/oder Abhängeinrichtung zum Anhängen und/Abhängen von Objekten an bzw. von Rollläufern gemäß einer Ausführungsform der Erfindung.

In den Figuren werden für gleiche Teile die gleichen Bezugszeichen verwendet.

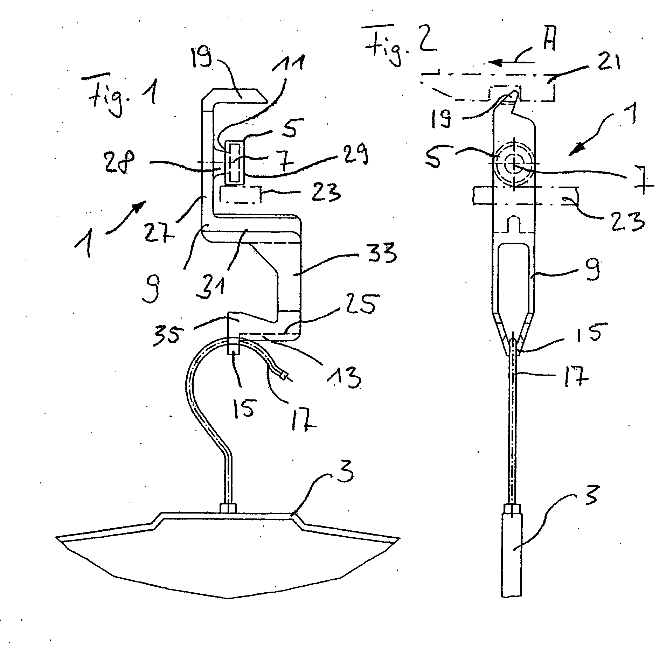

Der Rollläufer 1 gemäß dem in den Figuren 1 bis 3 gezeigten, ersten Ausführungsbeispiel ist zum hängenden Transport eines Objekts 3, wie zum Beispiel eines Kleiderbügels mit einer daran hängenden Textilware vorgesehen, und weist auf: eine drehbare Rolle 5 mit einer Rollenachse 7, einen Aufhängerkorpus 9, der einseitig nur von der einen Rollenseite 11 her an der Rolle 5 bzw. deren Rollenachse 7 befestigt ist und der unterhalb der Rolle 5 eine Hänge-Öse 13 mit einem Haltebügelabschnitt 15 aufweist, in welche ein Eingriffstück 17, z.B. in Form eines Hakenteils, des zu transportierenden Objekts 3 eingreifen kann, um das zu transportierende Objekt 3 an den Rollläufer 1 anzuhängen. Der Aufhängerkorpus weist ferner einen Mitnahmeabschnitt 19 auf, an welchem ein Mitnehmer 21 einer Mitnehmervorrichtung angreifen kann, um den auf eine Führungsschiene 23 gesetzten und an dieser rollend gelagerten Rollläufer 1 entlang der Führungsschiene 23 geführt in eine Transportrichtung oder Rollrichtung (Pfeil A) mitzunehmen.

Bei dem Rollläufer 1 gemäß Figuren 1-3 erstreckt sich die Hänge-Öse 13 mit ihrer Ösen-Öffnung 25 (Ösen-Öffnungsfläche) quer, hier horizontal, zur Vertikalen, die sich durch die Vertikal-Hängeanordnung des auf der Führungsschiene 23 hängend und rollend gelagerten Rollläufers 1 bzw. dessen Aufhängerkorpus definiert. Dadurch kann das Eingriffsstück 17 des zu transportierende Objekts 3 vertikal in die Hänge-Öse 13 bzw. in deren Ösen-Öffnung 25 eingesetzt werden. Hierbei kann die (tatsächliche) Eingriffsbewegung des Eingriffsstücks 17 in die Ösen-Öffnung 25 und damit in die Hänge-Öse 13 ausschließlich eine Vertikalbewegung sein.

Dies erlaubt es z.B., das Objekt 3 mit seinem Eingriffstück 17 irgendwo entlang der Führungsschiene 23 durch eine (bloße) Horizontalbewegung horizontal quer zur Transportrichtung A oder in Längsrichtung der Rollenachse 7 in Flucht mit der Hänge-Öse 13 bzw. deren Ösen-Öffnung 25 zu bringen, dann entkoppelt hiervon das Eingriffstück durch eine (bloße) Horizontalbewegung in Transportrichtung A oder längs der Führungsschiene 23 oder quer zur Rollenachse 7 in Flucht mit der Hänge-Öse 13 bzw. deren Ösen-Öffnung 25 zu bringen und dann wiederum entkoppelt hiervon das Eingriffstück 17 durch eine (bloße) Vertikalbewegung nach unten (letztlich) in Eingriff mit der Hänge-Öse 13 zu bringen. Der Vorgang kann bei in Transportrichtung A angetriebenen Rollläufern 1 durchgeführt, wozu die Objekte 3 mit ihren Eingriffstücken beim Anhängen an die Rollläufer 1 synchron zu deren Transportgeschwindigkeit angetrieben werden. Das Aushängen der Eingriffstücke 17 aus den Hänge-Ösen kann in umgekehrter Reihenfolge wie das oben beschriebene Einhängen erfolgen. Das Einhängen und demgemäß das Aushängen der Eingriffstücke 17 in bzw. von der Hänge-Öse 17 erfolgt hier von der der Rolle 5 abgewandten Seite her, d.h. von der einen Rollenseite 11 her, von welcher her auch der Aufhängerkorpus 9 an der Rolle 5 festgelegt ist.

Der Aufhängerkorpus 9 hat einen sich auf der einen Rollenseite 11 nach unten erstreckenden, hier vertikal nach unten erstreckenden, ersten Steg 27, einen sich ausgehend vom ersten Steg 27 quer zu diesem von der einen Rollenseite 11 zu der anderen Rollenseite 29 erstreckenden, hier horizontal erstreckenden, zweiten Steg 31, einen sich ausgehend von dem zweiten Steg 31 quer zu diesem nach unten erstreckenden, hier vertikal nach unten erstreckenden, dritten Steg 33 und einen sich ausgehend von dem dritten Steg 33 quer zu diesem von der anderen Rollenseite 29 zu der einen Rollenseite 11 erstreckenden, hier horizontal erstreckenden, vierten Steg 35, wobei die Hänge-Öse 13 im vierten Steg 35 ausgebildet ist und sich auch in den dritten Steg 33 hineinerstreckt. Ansonsten erstreckt sich von der anderen Seite 29 der Rolle 5 aus kein Korpusabschnitt mehr; d.h. auf der anderen Rollenseite 29 besteht keine Strukturverbindung zwischen der Rolle 5 bzw. deren Rollenachse 7 und dem Aufhängerkorpus 9. Am ersten Steg 27 ist an dessen der Rolle 5 zugewandten Seite ein Ansatz 28 ausgebildet, z.B. einstückig angeformt, an dem die Rolle 5 befestigt ist. Der Ansatz 28 kann z.B. die Rollenachse 7 ausbilden.

Der dritte und der vierte Steg 33, 35 bilden bei diesem ersten Ausführungsbeispiel eine L-Form aus mit jeweils zwei in Richtung quer zur Rollenachse 7 im Abstand voneinander angeordneten Stegseitenwänden, zwischen denen somit ein Schlitz ausgebildet ist, welcher auch die Hänge-Öse 13 mit definiert, welche letztlich am freien, der einen Rollenseite 11 zugewandten Ende des vierten Stegs 35 durch den Haltebügelabschnitt 15 begrenzt ist.

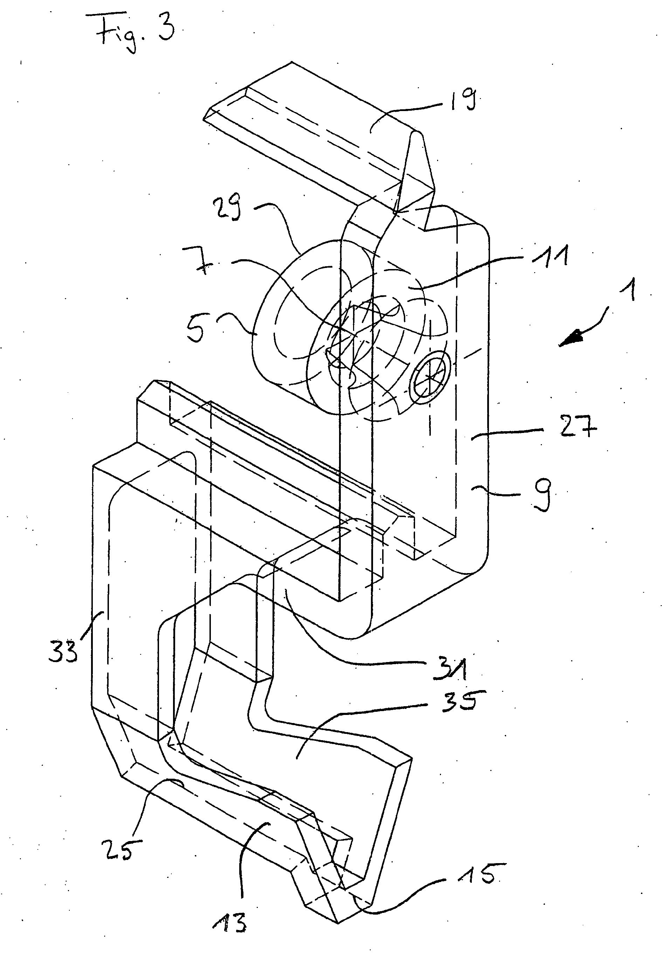

Der vierte Steg 35 weist im Schnitt quer zur Rollenachse 7 der Rolle 5 eine V-Form auf (siehe Figur 3). D.h., in der Seitenansicht in Richtung der Rollenachse 7 der Rolle 5 gesehen ist der vierte Steg 35 im Schnitt (hier auch in der ungeschnittenen Seitenansicht) V-förmig, wobei das V nach oben hin divergiert und der Haltebügelabschnitt in der V-Basis der V-Form liegt.

Wie aus Figuren 1 und 2 ersichtlich ist, ist der Haltebügelabschnitt 15 der Hänge-Öse 13 sowohl in Richtung längs als auch quer zu der Rollenachse 7 der Rolle 5 fluchtend unter der Rolle 5 angeordnet.

Ferner erstreckt sich beim ersten Ausführungsbeispiel gemäß den Figuren 1-3 der erste Steg 27 auch nach oben hin über die Rolle 5 hinausgehend, wobei sich der Mitnahmeabschnitt 19 des Aufhängerkorpus 9 vom ersten Steg 27 aus quer zu diesem, hier horizontal, von der einen Rollenseite 11 zu der anderen Rollenseite 29 über die Rolle 5 hinweg erstreckt. Der Mitnahmeabschnitt 19 ist hierbei langgestreckt ausgebildet und ist unter Ausbildung einer Hakenform in Seitenansicht des Rollläufers 1 gesehen etwas entgegen der Transportrichtung A geneigt ausgebildet. In Frontansicht gesehen ist der Mitnahmeabschnitt 19 an seinen beiden Längsenden oben jeweils abgeschrägt oder abgerundet, sodass der Eingriffsvorgang mit dem Mitnehmer 21 beim seitlichen Einschleusen oder Ausschleusen auf die Führungsschiene 23 bzw. von der Führungsschiene 23 sanfter abläuft. Der Mitnehmer 21 hat hierzu z.B. einen entsprechend langgestreckten und sich quer zur Transportrichtung erstreckenden Mitnehmerabschnitt mit an dessen Längsenden entsprechenden Abschrägungen oder Abrundungen. In der Frontansicht, d.h. quer zur Rollenachse 7 gesehen, hat der Aufhängerkorpus 9 mit seinen Stegen 27, 31, 33, 35 und seinem Mitnahmeabschnitt 19 eine S-Form (siehe Figur 1).

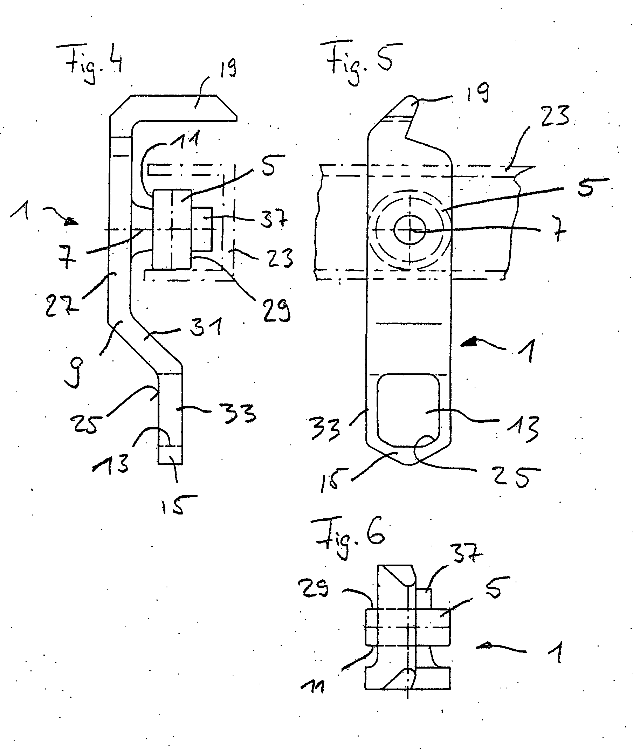

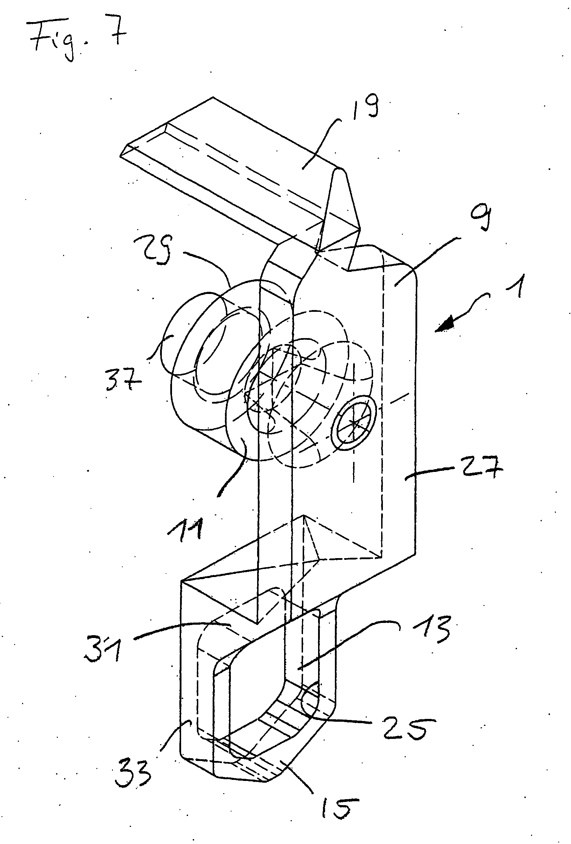

Das in den Figuren 4 bis 7 gezeigte, zweite Ausführungsbeispiel eines Rollläufers 1 gemäß der Erfindung entspricht in einigen Teilen dem ersten Ausführungsbeispiel von Figuren 1 bis 3, sodass nachfolgend vor allem die Unterschiede zu der vorigen Ausführungsform erläutert werden und ansonsten auf die obige Beschreibung der vorigen, ersten Ausführungsform verwiesen wird.

Bei der Ausführungsform von Figuren 4-7 weist der Aufhängerkorpus 9 des Rollenläufers 1 auf: einen sich von der Rollenachse 7 der Rolle 5 nach unten erstreckenden, hier sich vertikal nach unten erstreckenden, ersten Steg 27, einen sich quer zu diesem von der einen Rollenseite 11 zu der anderen Rollenseite 29 erstreckenden, hier sich schräg nach unten erstreckenden, zweiten Steg 31 und eine sich quer zu diesem nach unten erstreckenden, hier sich vertikal nach unten erstreckenden, dritten Steg 33 auf, wobei in diesem Falle die Hänge-Öse 13 im dritten Steg 33 ausgebildet ist. Die Hänge-Öse erstreckt sich bei diesem zweiten Ausführungsbeispiel mit ihrer Ösen-Öffnung 25 vertikal, wobei die Ösen-Öffnung 25 zur Seite hin, d.h. in der Richtung der Rollenachse 7 der Rolle 5, offen ist, sodass ein hier nicht dargestelltes Eingriffstück nicht durch eine Vertikalbewegung in Eingriff mit der Hänge-Öse 13 gebracht werden kann, sondern durch eine Horizontalbewegung von der Seite her in die Ösen-Öffnung 25 hinein. Erst nach oder in Kombination mit dem horizontalen Eingreifen des Eingriffstücks 1 in die Hänge-Öse 13 kann das Eingriffstück 1 auf den Haltebügelabschnitt 15, welcher die Hänge-Öse 13 hier vertikal nach unten hin begrenzt, abgesenkt werden. Das Eingriffstück 1 kann aber auch über kombinierte Bewegungsabläufe mit der Hänge-Öse 13 in Eingriff gebracht werden, wie z.B. nach erfolgter Ausrichtung des Eingriffstücks 1 zur Hänge-Öse 13 in Laufrichtung des Rollläufers 1 quer zur Rollenachse 7 durch eine Schrägbewegung zur Seite und nach unten als kombinierte Bewegung der Eingriffstücks 1 in Richtung der Rollenachse 7 und quer dazu nach unten in die Hänge-Öse 13 hinein oder auch nach erfolgter Ausrichtung des Eingriffstücks 1 zur Hänge-Öse 13 in Richtung der Rollenachse 7 durch eine Schrägbewegung/kombinierte Bewegung in Laufrichtung des Rollläufers 1 quer zur Rollenachse und nach unten in die Hänge-Öse 13 hinein.

Auch in dieser zweiten Ausführungsform ist die Hänge-Öse 13 fluchtend unter der Rolle 5 positioniert, und ein langgestreckter Mitnahmeabschnitt 19 des Aufhängerkorpus erstreckt sich quer zu dem nach oben über die Rolle 5 hinausgehend verlängerten ersten Steg 27 des Aufhängerkorpus 9, und zwar von dem ersten Steg 27 ausgehend von der einen Rollenseite 11 zur anderen Rollenseite 29 hin.

Wie bei der vorigen, ersten Ausführungsform ist der Aufhängerkorpus 9 hier als ein Stück ausgebildet, z.B. als ein Kunststoff-Spritzgussteil.

Auf der anderen Rollenseite 29 ist ein Gegengewicht 37 an der Rolle 5 oder an der Rollenachse 7 angebracht. Dieses Gegengewicht konnte beim ersten Ausführungsbeispiel entfallen, da sich beim ersten Ausführungsbeispiel der dortige dritte Steg 33 auf der anderen Rollenseite 29 erstreckt und so bereits ein ausreichendes Gegengewicht zu dem sich auf der einen Rollenseite 11 erstreckenden ersten Steg 27 bildet.

Die Führungsschiene 23 hat bei diesem zweiten Ausführungsbeispiel ein C- oder U-Profil, welches zu Seite hin offen ist. Die einseitige Anbringung bzw. Anlenkung des Aufhängerkorpus 9 an der Rolle 5 erlaubt es hierbei, den Rollläufer 1 mit seiner Rolle 5 sehr einfach von der Seite her in die Führungsschiene einzusetzen.

Die C- oder U-Führungsschiene gemäß dem zweiten Ausführungsbeispiel von Figuren 4 und 5 ist auch z.B. für die erfindungsgemäße Hängeförderanlage vorgesehen, welche entsprechende C-Profil- oder U-Profil-Führungsschienen, mit zur Seite hin offenem Profil, aufweisen kann, welche ferner eine Mehrzahl von wie in dieser Anmeldung beschriebenen Rollläufern aufweisen kann, die auf oder in den Führungsschienen rollend gelagert sind, und welche eine Mitnehmervorrichtung mit Mitnehmern 21 aufweisen kann, von welcher die Rollläufer entlang der Führungsschienen 23 durch Angreifen an dem Mitnahmeabschnitt 19 des jeweiligen Rollläufers 1 mitnehmbar sind.

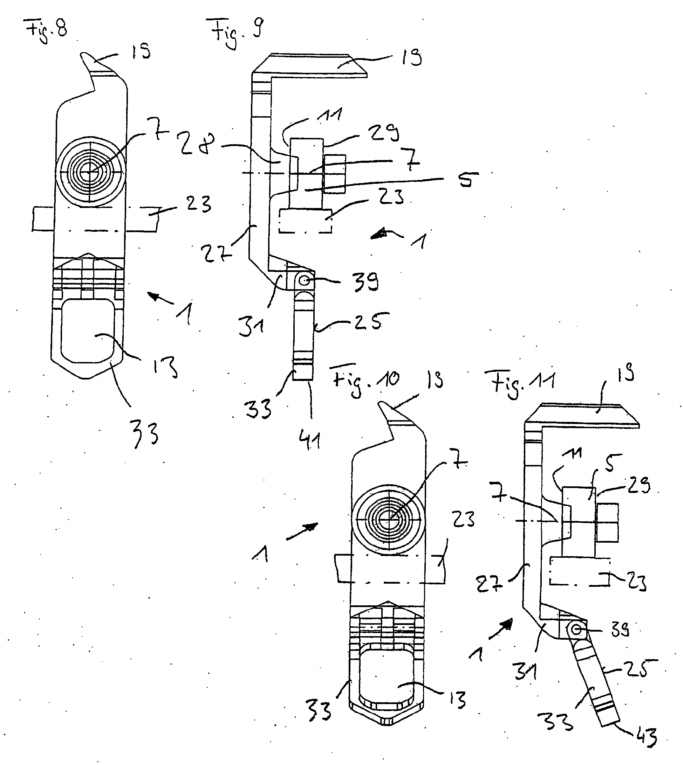

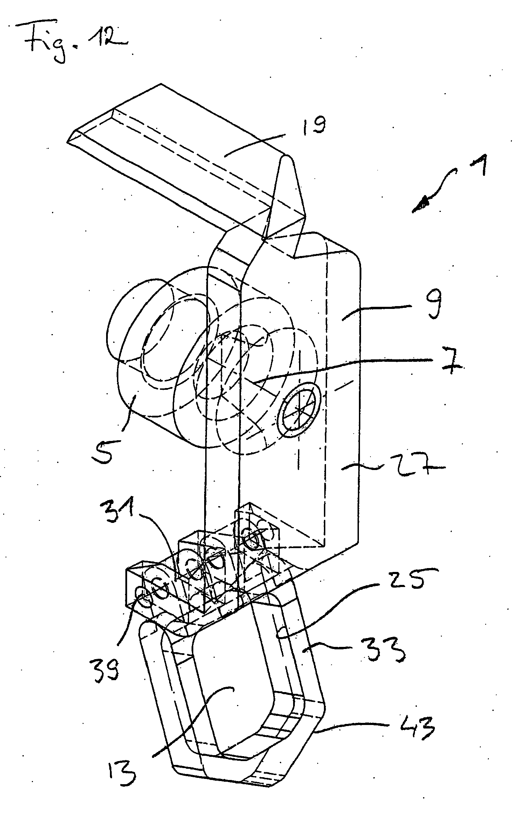

Die Figuren 8 bis 12 zeigen noch ein drittes Ausführungsbeispiel eines erfindungsgemäßen Rollläufers 1, der auf einer Führungsschiene 23 einer Hängeförderanlage rollend sowie geführt gelagert ist und entlang der Führungsschiene 23 von hier nicht dargestellten Mitnehmern mitnehmbar ist.

Das dritte Ausführungsbeispiel entspricht im Wesentlichen dem zweiten Ausführungsbeispiel, das oben anhand von Figuren 4-7 erläutert wurde, sodass nachfolgend vor allem die Unterschiede zum zweiten Ausführungsbeispiel erläutert werden und ansonsten auf die vorige Beschreibung des zweiten Ausführungsbeispiels verwiesen wird.

Gemäß dem dritten Ausführungsbeispiel hat der Aufhängerkorpus 9 des Rollläufers 1 einen ersten, sich auf der einen Rollenseite 11 nach unten erstreckenden Steg 27, an dem der Ansatz 28 ausgebildet ist, an welchem die Rolle 5 drehbar angebracht ist. Der Aufhängerkorpus 9 hat ferner einen zweiten Steg 31, der sich vom ersten Steg 27 aus quer zu diesem von der einen Rollenseite 11 zur anderen Rollenseite 29 erstreckt. Der erste Steg 27, der zweite Steg 31 sowie ein sich vom ersten Steg 27 aus erstreckender Mitnahmeabschnitt 19 sind als ein Stück ausgeformt.

Ein die Hänge-Öse 13 ausbildender dritter Steg 33 ist am zweiten Steg 31 schwenkbar angebracht, und zwar hier am freien Ende des zweiten Stegs 31, wobei sich die zugehörige Schwenkachse 39 in Transportrichtung des Rollläufers quer zur Rollenachse 7 der Rolle 5 erstreckt, sodass der dritte Steg 33 und damit die Hänge-Öse 13 zwischen einer ersten Position 41, in welcher sich die Hänge-Öse 13 mit ihrer Ösen-Öffnung 25 vertikal erstreckt, und einer zweiten Position 43, in welcher sich die Hänge-Öse 13 mit Ösen-Öffnung 25 quer zur Vertikalen erstreckt, relativ zur Rollenachse 7 hin und her bewegbar bzw. schwenkbar ist. Die schwenkend bewegbare Hänge-Öse 13 kann auch nach Bedarf auch in eine dritte Position bewegt werden, welche bezüglich der ersten Position entgegengesetzt zu der zweiten Position befindet und in welcher sich die Hänge-Öse 13 mit ihrer Hänge-Öse ebenfalls quer zur Vertikalen erstreckt.

Die zweite und/oder die dritte Position der Hänge-Öse 13 kann z.B. die Eingriffsposition der Hänge-Öse 13 sein, welche es ermöglicht, das das Eingriffstück des zu transportierenden Objekts vertikal, z.B. durch eine bloße Vertikalbewegung des Eingriffstücks, in die Hänge-Öse 13 einsetzbar ist. An einer Objekt-Einschleus- und/oder Ausschleusstelle eines Führungsschienensystems einer Hängerförderanlage können hierbei Betätigungsvorrichtungen, z.B. Auflaufleisten vorgesehen sein, welche die schwenkbaren Hänge-Ösen 13 beim Vorbeitransportieren der zugehörigen Rollläufer 1 kontaktieren, um diese dadurch automatisch von der ersten Position in die zweite Position aufschwenken, wodurch das Einhängen und das Aushängen von Eingriffstücken in die bzw. von den Hänge-Ösen erleichtert wird.

Nach dem Einhäng- oder Aushängvorgang, kann die Hänge-Öse 13 z.B. einfach losgelassen werden, wodurch sie via Schwerkraft in ihre erste Position zurückkehrt, welche z.B. ihre Transportposition für an der Hänge-Öse 13 hängende, zu transportierende Objekte darstellt.

Die zweite Position der (dann ausgeschwenkten) Hänge-Öse 13 befindet sich z.B. auf der dem Aufhängerkorpus 9 zugewandten, einen Seite 11 der Rolle 5 (in den Figuren 10-12 gerade andersherum dargestellt), wobei sich die ggf. vorliegende dritte Position auf der dem Aufhängerkorpus 9 abgewandten, anderen Seite 29 der Rolle 5 befindet.

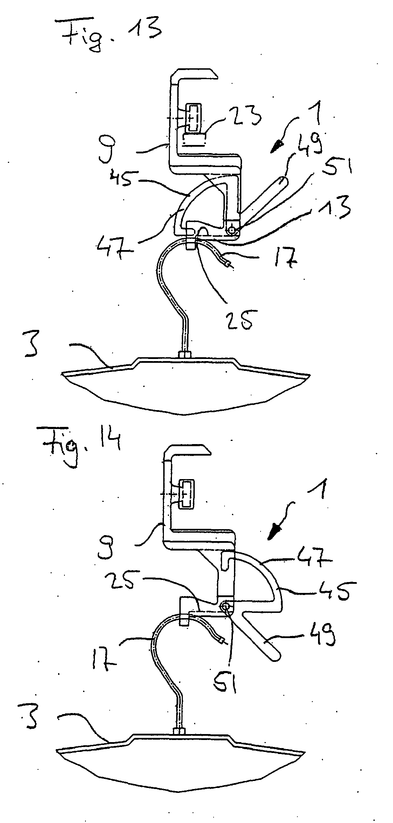

Das in Figuren 13 und 14 gezeigte, vierte Ausführungsbeispiel eines Rollläufers 1 entspricht im wesentlichen dem in Figuren 1-3 gezeigten, ersten Ausführungsbeispiel mit dem einen Unterschied, dass beim vierten Ausführungsbeispiel ein Riegel 45, hier in Form eines Schwenkriegels, vorgesehen ist, der in seiner Verriegelungsposition (siehe Figur 13) verhindert, dass das Eingriffstück 17 außer Eingriff von der Hänge-Öse 13 gelangen kann, und der in seiner Entriegelungsposition (siehe Figur 14) das Eingriffstück 17 freigibt, sodass es von der Hänge-Öse 13 entnehmbar ist. Hierzu ist der Riegel 45 am Aufhängerkorpus 9 zwischen seiner Verriegelungsposition und seiner Entriegelungsposition hin und her bewegbar, hier hin und her schwenkbar, gelagert.

In der vorliegenden, vierten Ausführungsform weist der Riegel 45 einen Verriegelungsarm 47 auf, der schwenkend über die Ösen-Öffnung 25 schwenkbar ist und diese damit sperrt. Der Riegel 45 weist ferner einen Betätigungshebel 49 auf, der sich bezüglich der Schwenkachse 51 des Riegels 45 auf der dem Verriegelungsarm 47 gegenüberliegenden Seite erstreckt. Beim Be- und/oder Entladen des Rollläufers 1, d.h. beim Anhängen und/oder Abhängen von Objekten 3 an den/von dem Rollläufer 1 kann der Riegel 45 anhand des Betätigungshebels 49 automatisch in seine Entriegelungsposition und in seine Verriegelungsposition gebracht werden, z.B. mittels einer parallel zu der von der Führungsschiene 23 definierten Transportbahn angeordneten Betätigungseinrichtung, wie z.B. einer Leiste, die den Betätigungshebel 49 entsprechend kontaktiert.

Bei den obigen Ausführungsbeispielen gemäß den Figuren 1 bis 14 ist die Hänge-Öse 13 komplett geschlossen. Gemäß der Erfindung kann die Umfangsbegrenzung der Hänge-Öse aber auch geschlitzt sein und damit unterbrochen sein, wobei dieser Schlitzzugang zur Hänge-Öse z.B. derart schmal sein kann, dass das Eingriffstück nicht dort hindurch gelangen kann. Damit ist die Hänge-Öse hiermit derart geschlossen gestaltet, dass das Eingriffstück nicht in Richtung parallel zur Ösen-Öffnung (Ösen-Öffnungsfläche) (= quer zur Öffnungsrichtung der Ösen-Öffnung), d.h. durch die Begrenzung oder Begrenzungswand der Hänge-Öse, aus der Hänge-Öse entnehmbar ist.

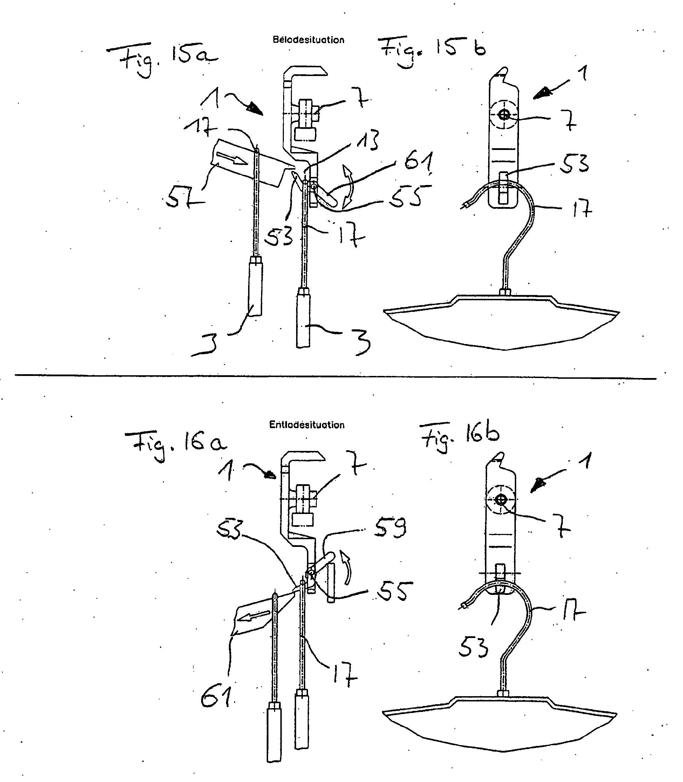

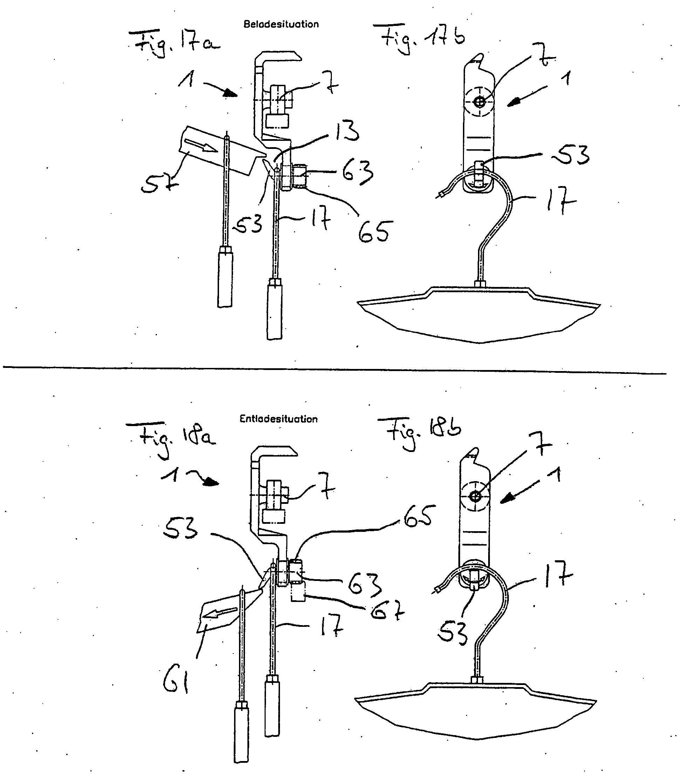

Bei dem in den Figuren 15a bis 16b gezeigten, fünften Ausführungsbeispiel eines Rollläufers 1 gemäß der Erfindung und dem in den Figuren 17a bis 18b gezeigten, sechsten Ausführungsbeispiel eines Rollläufers 1 gemäß der Erfindung werden die Hänge-Öse 13 von einem Hakenelement 53 ausgebildet, sodass die Hänge-Öse 13 nicht wie vorstehend erläutert geschlossen ausgebildet ist, sondern von einer Hakenaufnahme gebildet ist, in welche das Eingriffstück 17 in Richtung parallel zu der von der Hakenform des Hakenelements 53 ausgebildeten Ösen-Öffnung (Ösen-Öffnungsfläche) bzw. quer zur Öffnungsrichtung der Ösen-Öffnung einsetzbar ist.

Bei wie oben erläuterten, geschlossenen Hänge-Ösen 13 werden die Hänge-Ösen 13 in der Regel quer zur Transportrichtung des Rollläufers 1 oder in Längsrichtung der Rollenachse 7 seitlich durchgriffen, wohingegen die von einer Hakenaufnahme gebildeten Hänge-Ösen 13, wie z.B. jene gemäß der Ausführungsbeispiele von Figuren 15a bis 18b, in Transportrichtung des Rollläufers 1 oder in Richtung quer zur Rollenachse 7 von den Eingriffstücken 17 durchgriffen werden.

Beim Ausführungsbeispiel von Figuren 15a bis 16b ist das Hakenelement 53 um eine sich in Transportrichtung des Rollläufers 1 oder in Richtung quer zur Rollachse 7 erstreckende Schwenkachse 55 schwenkend angeordnet, wobei das Hakenelement 53 hierbei in eine Beladungsposition (siehe Figuren 15a und 15b) nach oben schwenkbar ist, in welcher das Hakenelement 53 mit seinem freien Hakenendabschnitt nach oben steht, hier schräg nach oben, um ein daran angehängtes Eingriffstück 17 eines zu transportierenden Objekts 3 sicher am Rollläufer 1 angehängt halten zu können. Die Hänge-Öse 13 ist hierbei parallel zu ihrer Ösen-Öffnung nach oben hin zugänglich, sodass Eingriffstücke 17 auf einer Zuführschiene 57 zum Beispiel via Schwerkraft rutschend von oben her in die Hänge-Öse 13 hineinrutschen können, wobei sich die Eingriffstücke 17 in Richtung quer zur Ösen-Öffnung (= quer zur Ösen-Öffnungsfläche) erstrecken.

Ferner ist das Hakenelement 53 in eine Entladungsposition (siehe Figuren 16a und 16b) nach unten schwenkbar, in welcher das Hakenelement 53 mit seinem freien Hakenendabschnitt nach unten steht, hier schräg nach unten, um das daran angehängte Eingriffstück 17 freizugeben. Hierbei kann das Hakenelement 53 z.B. derart weit nach unten geschwenkt werden, dass das Eingriffstück 17 allein via Schwerkraft aus dem Eingriff mit dem Hakenelement 53 gelangt und entlang dessen nach unten rutscht, um dann z.B. auf eine Abführschiene 59 zu gelangen, auf welcher es dann zusammen mit dem Objekt 3 vom Rollläufer 1 via Schwerkraft rutschend abgeführt wird.

Das Hakenelement 53 erstreckt sich auf seiner bezüglich der Schwenkachse 55 entgegen gesetzten Seite mit einem Betätigungshebel 61 fort, an welchem eine Betätigungseinrichtung angreifen kann, um das Hakenelement 53, z.B. in einer zu der Zuführschiene 57 fluchtenden Position, in seine Beladungsposition nach oben zu schwenken, und um das Hakenelement 53, z.B. in einer zu der Abführschiene 59 fluchtenden Position, in seine Entladungsposition abwärts zu schwenken.

Ansonsten ist der Rollläufer 1 gemäß dem fünften Ausführungsbeispiel wie der Rollläufer gemäß z.B. dem zweiten oder dritten Ausführungsbeispiel ausgestaltet, sodass hinsichtlich der weiteren Gestaltungsmerkmale auf die obige Beschreibung dieser Ausführungsbeispiele verwiesen wird.

Der Rollläufer 1 gemäß dem in den Figuren 17a bis 18b gezeigten Ausführungsbeispiel ist im wesentlichen wie jener gemäß dem fünften Ausführungsbeispiel ausgestaltet, mit dem einen Unterschied, dass beim sechsten Ausführungsbeispiel das Hakenelement 53 nicht um eine sich quer zur Rollachse 7 in Transportrichtung des Rollläufers 1 erstreckende Schwenkachse schwenkbar ist, sondern dass das Hakenelement 53 um eine sich quer zur Transportrichtung parallel, z.B. auch in etwa parallel, zu der Richtung der Rollenachse 7 erstreckende Drehachse 63 drehbar ist, z.B. auch hin und her drehbar ist. Durch diese Drehung kann das bei diesem sechsten Ausführungsbeispiel das Hakenelement 53 ebenfalls nach unten geschwenkt in eine dem fünften Ausführungsbeispiel entsprechenden Entladungsposition gedreht werden (siehe Figur 18a), um ein Objekt 3 mit dessen Eingriffstück 17 an eine Abführschiene abzugeben, und kann ebenfalls in eine dem fünften Ausführungsbeispiel entsprechenden Beladungsposition gedreht werden (siehe Figur 17a), um ein Objekt 3 mit dessen Eingriffstück 17 von einer Zuführschiene aufzunehmen.

Zum Drehen des Hakenelements 53 um seine Drehachse 63 ist das Hakenelement 53 z.B. mit einem Zahnrad 65 verbunden, z.B. einstückig ausgebildet, das bezüglich der Drehachse 63 koaxial angeordnet ist und das über einen Zahneingriff mit einer zahnrad- oder kettenförmigen Betätigungsvorrichtung 67 drehbewegbar ist, um dadurch das Hakenelement 53 entsprechend mitzudrehen.

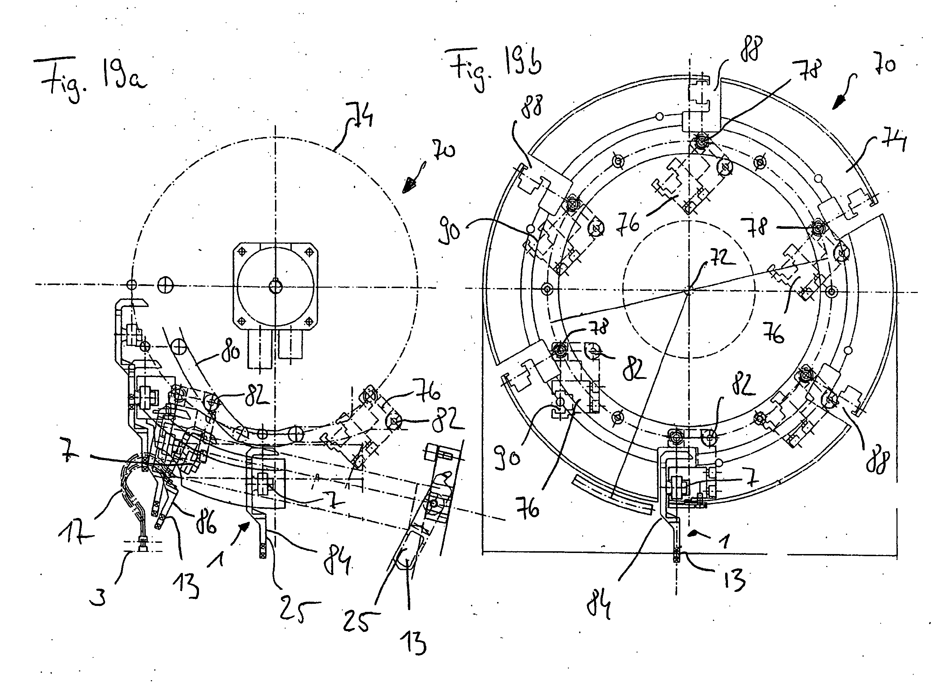

Figuren 19a und 19b zeigen schematisch in Frontansicht jeweils eine Anhäng- und/oder Abhängeinrichtung 70 zum Anhängen und/oder Abhängen von Objekten 3 an Rollläufer 1 gemäß einer Ausführungsform der Erfindung. Die Einrichtung 70 ist als eine Art Revolvereinrichtung ausgebildet und weist auf: ein um eine Rotationsachse 72 drehbares Rotationsteil 74, hier in Form einer Drehscheibe, an welchem mehrere in Umfangsrichtung des Rotationsteils 74 im Winkelabstand voneinander angeordnete Aufnahmeteile 76 über eine Gelenkachse 78 gelenkig angebracht sind, welche mit dem Rotationsteil 74 mitrotieren und deren Gelenkachse 78 parallel zur Rotationsachse 72 des Rotationsteils 74 verläuft und in welchen jeweils ein jeweiliger Rollläufer 1 derart aufnehmbar ist, dass der jeweilige Rollläufer 1 bezüglich der Gelenkachse 78 und der Rotationsachse 72 relativ zu dem jeweiligen Aufnahmeteil 76 drehfest ist, eine stationäre Kurvenführung 80, in welche ein am Aufnahmeteil 76 ausgebildetes Eingriffsteil 82, hier in Form einer Führungsrolle, bei der Rotation des Rotationsteils 74 eingreift, um das jeweilige Aufnahmeteil 76 mit dem jeweiligen darin aufgenommenen Rollläufer 1 relativ zum Rotationsteil 74 ausgehend von einer vertikalen Transportposition 84, in welcher der Aufhängerkorpus 9 vertikal angeordnet ist, in eine Aufschwenkposition 86 aufzuschwenken, in welcher das anzuhängende Objekt 3 mit seinem Eingriffstück 17 in Eingriff mit der Hänge-Öse 13 bringbar ist.

Das Rotationsteil 74 weist im Bereich der daran angebrachten Aufnahmeteile 76 einen jeweiligen Durchbruch 88 auf, welcher sich axial durch das Rotationsteil 74 erstreckt und durch welchen hindurch der jeweilige Rollläufer 1 unter Durchfahren eines im Aufnahmeteil 76 zur Aufnahme des Rollläufers 1 ausgebildeten Aufnahmeraums 90 axial von einer Seite zur anderen Seite des Rotationsteils 74 überführbar ist. Damit kann zum Beispiel die Einrichtung 70 mit ihrem Rotationsteil 74 in eine der Axialdicke des Rotationsteils 74 angepasste Lücke eines Schienenabschnitts des Schienensystems der Hängeförderanlage eingebaut sein, wobei dieser Schienenabschnitt zu einer bestimmten Winkelposition (Überführungswinkelposition), hier der vertikal untersten Winkelposition, der im Rotationsteil 74 ausgebildeten Durchbrüche 88 fluchtet. Damit können Rollläufer 1 in dieser Überführungswinkelposition durch Einlaufen in den Durchbruch 88 auf das dortige Aufnahmeteil 76 überführt werden, um von diesem im Rahmen der Rotationsbewegung des Rotationsteils 74 rotierend mitgenommen zu werden. Die rückführende Überführung von dem jeweiligen Aufnahmeteil 76 auf das Schienensystem kann wiederum in der gleichen Überführungswinkelposition erfolgen. Das jeweilige Aufnahmeteil 76 hat hierbei eine solche Länge (in Richtung der Axialdicke des Rotationsteils 74 gesehen), dass zwei Rollläufer 1 hintereinander darin aufnehmbar sind.

Bei der Ausführungsform von Figuren 19a und 19b werden Rollläufer 1 gemäß der Ausführungsform von Figuren 4 bis 7 eingesetzt. In der vertikalen Transportposition 84, in welcher die Rollläufer 1 auch auf den Schienenwegen des Schienensystems der Hängeförderanlage verfahren werden, ist die Hänge-Öse 13 des Rollläufers 1 in einer Vertikalposition mit sich vertikal erstreckender Ösen-Öffnung. Die Aufschwenkposition des Rollläufers 1 stellt eine Schrägposition dar, in welcher der Rollläufer 1, d.h. dessen Aufhängerkorpus 9 zusammen mit der Rollenachse 7, bezüglich der Vertikalen schräg ausgeschwenkt ist und in welcher die Hänge-Öse 13 mit ihrer Ösen-Öffnung 25 derart quer zur Vertikalen erstreckt, dass das Eingriffstück 17 des zu transportierenden Objekts 3 vertikal in die Hänge-Öse 13 einsetzbar ist.

Weiter Ausführungsformen der Erfindung sind z.B. wie folgt:
Gemäß einer ersten weiteren Ausführungsform wird Rollläufer 1 zum hängenden Transport eines Objekts 3 bereitgestellt, aufweisend eine drehbare Rolle 5 mit einer Rollenachse 7 und einen Aufhängerkorpus 9, der einseitig von einer Rollenseite 11 her an der Rollenachse 7 befestigt ist und der unterhalb der Rolle 5 eine Hänge-Öse 13 aufweist, in welche ein Eingriffstück 17 eines zu transportierenden Objekts 3 eingreifen kann, um das zu transportierende Objekt 3 an den Rollläufer 9 anzuhängen, und der einen Mitnahmeabschnitt 19 aufweist, an welchem ein Mitnehmer 21 einer Mitnehmervorrichtung angreifen kann, um den an einer Führungsschiene 23 rollend gelagerten Rollläufer 1 entlang der Führungsschiene 23 mitzunehmen.

Gemäß einer zweiten weiteren Ausführungsform wird ein Rollläufer 1 zum hängenden Transport eines Objekts 3 bereitgestellt, insbesondere gemäß der ersten weiteren Ausführungsform, aufweisend eine drehbare Rolle 5 mit einer Rollenachse 7 und einen an der Rollenachse 7 befestigten Aufhängerkorpus 9 mit einer unterhalb der Rolle 5 angeordneten Hänge-Öse 13, in welche ein Eingriffstück 17 eines zu transportierenden Objekts 3 eingreifen kann, um das zu transportierende Objekt 3 an den Rollläufer 1 anzuhängen, und einem Mitnahmeabschnitt 19, an welchem ein Mitnehmer 21 einer Mitnehmervorrichtung angreifen kann, um den an einer Führungsschiene 23 rollend gelagerten Rollläufer 1 entlang der Führungsschiene 23 mitzunehmen, wobei sich die Hänge-Öse 13 mit ihrer Ösen-Öffnung 25 derart quer zur Vertikalen erstreckt, dass das Eingriffstück 17 des zu transportierenden Objekts 3 vertikal in die Hänge-Öse 13 einsetzbar ist, oder wobei die Hänge-Öse 13 relativ zur Rollenachse 7 der Rolle 5 in eine Position 43 bringbar ist, in welcher sie sich mit ihrer Ösen-Öffnung 25 derart quer zur Vertikalen erstreckt, dass das Eingriffstück 17 des zu transportierenden Objekts vertikal in die Hänge-Öse 13 einsetzbar ist.

Gemäß einer dritten weiteren Ausführungsform wird ein Rollläufer 1 gemäß der ersten oder der zweiten weiteren Ausführungsform bereitgestellt, wobei der Aufhängerkorpus 9 einen sich auf der einen Rollenseite 11 nach unten erstreckenden ersten Steg 27, einen sich ausgehend vom ersten Steg 27 quer zu diesem von der einen Rollenseite 11 zu der anderen Rollenseite 29 erstreckenden zweiten Steg 31, einen sich ausgehend von dem zweiten Steg 31 quer zu diesem nach unten erstreckenden dritten Steg 33 und einen sich ausgehend von dem dritten Steg 33 quer zu diesem von der anderen Rollenseite 29 zu der einen Rollenseite 11 erstreckenden vierten Steg 35 aufweist, wobei die Hänge-Öse im vierten Steg ausgebildet ist.

Gemäß einer vierten weiteren Ausführungsform wird ein Rollläufer 1 gemäß der dritten weiteren Ausführungsform bereitgestellt, wobei der vierte Steg 35 im Schnitt quer zur Rollenachseachse 7 eine V- oder U-Form aufweist.

Gemäß einer fünften weiteren Ausführungsform wird ein Rollläufer 1 gemäß der ersten oder der zweiten weiteren Ausführungsform bereitgestellt, wobei der Aufhängerkorpus 9 einen sich auf der einen Rollenseite 11 nach unten erstreckenden ersten Steg 27, einen sich ausgehend vom ersten Steg 27 quer zu diesem von der einen Rollenseite 11 zu der anderen Rollenseite 29 erstreckenden zweiten Steg 31 und einen sich ausgehend von dem zweiten Steg 31 quer zu diesem nach unten erstreckenden dritten Steg 33 aufweist, wobei die Hänge-Öse 13 im dritten Steg ausgebildet ist.

Gemäß einer sechsten weiteren Ausführungsform wird ein Rollläufer 1 gemäß einer der ersten bis fünften weiteren Ausführungsform bereitgestellt, wobei die Hänge-Öse 13 einen Haltebügelabschnitt 15 aufweist, an welchen das Eingriffstück 17 angehängt werden kann und welcher unter der Rolle 5 zu dieser fluchtend positioniert oder positionierbar ist.

Gemäß einer siebten weiteren Ausführungsform wird ein Rollläufer 1 gemäß einer der ersten bis sechsten weiteren Ausführungsform bereitgestellt, wobei der Mitnahmeabschnitt 19 des Aufhängerkorpus 9 an seinen beiden Längsenden oben jeweils abgeschrägt oder abgerundet ist.

Gemäß einer achten weiteren Ausführungsform wird ein Rollläufer zum hängenden Transport eines Objekts 3 bereitgestellt, insbesondere gemäß der ersten weiteren Ausführungsform, aufweisend eine drehbare Rolle 5 mit einer Rollenachse 7 und einen an der Rollenachse 7 befestigten Aufhängerkorpus 9 mit einer unterhalb der Rolle 5 angeordneten Hänge-Öse 13 in welche ein Eingriffstück 17 eines zu transportierenden Objekts 3 eingreifen kann, um das zu transportierende Objekt 3 an den Rollläufer 1 anzuhängen, und einem Mitnahmeabschnitt 19, an welchem ein Mitnehmer 21 einer Mitnehmervorrichtung angreifen kann, um den an einer Führungsschiene 23 rollend gelagerten Rollläufer 1 entlang der Führungsschiene 23 mitzunehmen, wobei die Hänge-Öse 13 von einem Hakenelement 53 definiert wird, welches einen Zugang zur Hänge-Öse 13 in Richtung parallel zu deren Ösen-Öffnung erlaubt und welche relativ zur Rollenachse 7 entweder um eine sich in Transportrichtung A des Rollläufers 1 quer zur Rollenachse 7 erstreckende Schwenkachse 55 schwenkbar oder um eine sich quer zur Transportrichtung A in etwa parallel zur Rollenachse 7 erstreckende Drehachse 63 drehbar ist.

Gemäß einer neunten weiteren Ausführungsform wird eine Hängeförderanlage bereitgestellt mit Führungsschienen 23, einer Mehrzahl von Rollläufern 1 nach einer der ersten bis achten weiteren Ausführungsformen, die auf den Führungsschienen 23 rollend gelagert sind, und einer Mitnehmervorrichtung, von welcher die Rollläufer 1 entlang den Führungsschienen 23 durch Angreifen an dem Mitnahmeabschnitt 19 des jeweiligen Rollläufers 1 mitnehmbar sind.

Gemäß einer zehnten weiteren Ausführungsform wird eine Hängeförderanlage gemäß der neunten weiteren Ausführungsform bereitgestellt, wobei die Führungsschienen 23 einen zur Seite hin offenen Führungskanal aufweisen, und wobei die Rollläufer 1 mit ihrer Rolle 5 seitlich in den Führungskanal der Führungsschienen 23 eingreifen.

Gemäß einer elften weiteren Ausführungsform wird eine Hängeförderanlage gemäß der neunten oder zehnten weiteren Ausführungsform bereitgestellt, ferner mit einer Anhäng- und/oder Abhängeinrichtung 70 zum Anhängen und/oder Abhängen von Objekten 3 an und/oder von Rollläufern 1, welche aufweist ein um eine Rotationsachse 72 drehbares Rotationsteil 74, an welchem ein oder mehrere in Umfangsrichtung des Rotationsteils 74 im Winkelabstand voneinander angeordnete Aufnahmeteile 76 über eine Gelenkachse 78 gelenkig angebracht ist/sind, welches/welche mit dem Rotationsteil 74 mitrotiert/mitrotieren und dessen/deren Gelenkachse 78 parallel zur Rotationsachse 72 des Rotationsteils 74 verläuft und in welchem/welchen jeweils ein jeweiliger Rollläufer 1 derart aufnehmbar ist, dass der jeweilige Rollläufer 1 bezüglich der Gelenkachse 78 und der Rotationsachse 72 relativ zu dem jeweiligen Aufnahmeteil 74 im Wesentlichen drehfest ist, einer stationären Kurvenführung 80, in welche ein am Aufnahmeteil 74 oder am Rollläufer 1 ausgebildetes Eingriffsteil 82 bei der Rotation des Rotationsteils 74 eingreifen kann, um das jeweilige Aufnahmeteil 76 mit dem jeweiligen darin aufgenommenen Rollläufer 1 relativ zum Rotationsteil 74 in eine Aufschwenkposition 86 zu schwenken, in welcher das anzuhängende Objekt 3 mit seinem Eingriffstück 17 in Eingriff mit der Hänge-Öse 13 bringbar ist.

Gemäß einer zwölften weiteren Ausführungsform wird ein Verfahren zum Anhängen eines Eingriffstücks 17 eines Objekts 3 an einen Rollläufer 1 gemäß einer der ersten bis achten weiteren Ausführungsformen bereitgestellt, wobei das Objekt 3 mit seinem Eingriffstück 17 und die Hänge-Öse 13 des Rollläufers 1 relativ zueinander in eine Position gebracht werden, in welcher das Objekt 3 mit seinem Eingriffstück 17 in einer zu der Hänge-Öse 13 des Rollläufers 1 fluchtenden Position oberhalb der Ösen-Öffnung 25 ist, und dann das Objekt 3 mit seinem Eingriffstück 17 durch eine vertikale Bewegung nach unten in den Eingriff mit der Ösen-Öffnung 25 hinein gebracht wird.

Gemäß einer dreizehnten weiteren Ausführungsform wird ein Verfahren zum Anhängen eines Eingriffstücks 17 eines Objekts 3 an einen Rollläufer 1 gemäß einer der ersten bis achten weiteren Ausführungsformen bereitgestellt, wobei der Aufhängerkorpus 9 zusammen mit der Rollenachse 7 von einer vertikalen Transportposition 84 aus um eine sich in Transportrichtung A des Rollläufers 1 quer zur Rollenachse 7 erstreckende Schwenkachse 82 um einen Winkel in eine Aufschwenkposition 86 aufgeschwenkt wird, das Objekt 3 mit seinem Eingriffstück 17 in Eingriff mit der Hänge-Öse 13 des sich in der Aufschwenkposition 86 befindlichen Aufhängerkorpus 9 gebracht wird und der Aufhängerkorpus 9 von seiner Aufschwenkposition 86 um die Schwenkachse zurück in seine vertikale Transportposition 84 geschwenkt wird.

## Patentansprüche

1. Rollläufer (1) zum hängenden Transport eines Objekts (3), aufweisend
- eine drehbare Rolle (5) mit einer Rollenachse (7) und
- einen Aufhängerkorpus (9), der nur einseitig von einer Rollenseite (11) her an einer Rollenachse befestigt ist, welche von der Rollenachse (7) der drehbaren Rolle (5) gebildet ist, und der unterhalb der Rolle (5) eine Hänge-Öse (13) aufweist, in welche ein Eingriffstück (17) eines zu transportierenden Objekts (3) eingreifen kann, um das zu transportierende Objekt (3) an den Rollläufer (9) anzuhängen, und der einen Mitnahmeabschnitt (19) aufweist, an welchem ein Mitnehmer (21) einer Mitnehmervorrichtung angreifen kann, um den an einer Führungsschiene (23) rollend gelagerten Rollläufer (1) entlang der Führungsschiene (23) mitzunehmen, der Mitnahmeabschnitt (19) des Aufhängerkorpus (9) langgestreckt ausgebildet ist und sich mit seiner Längsrichtung oberhalb der Rolle (5) erstreckt,
**dadurch gekennzeichnet, dass**
der Mitnahmeabschnitt (19) des Aufhängerkorpus (9) sich mit seiner Längsrichtung oberhalb der Rolle (5) von der einen Rollenseite (11) über die Rolle (5) hinweg zu der anderen Rollenseite (29) erstreckt.

2. Rollläufer (1) zum hängenden Transport eines Objekts (3) nach Anspruch 1,
wobei
- sich die Hänge-Öse (13) mit ihrer Ösen-Öffnungsfläche (25) derart quer zur Vertikalen erstreckt, dass das Eingriffstück (17) des zu transportierenden Objekts (3) vertikal durch die Ösen-Öffnungsfläche hindurch in die Hänge-Öse (13) einsetzbar ist, oder wobei - die Hänge-Öse (13) relativ zur Rollenachse (7) der Rolle (5) um eine sich in Transportrichtung (A) des Rollläufers (1) quer zur Rollenachse (7) erstreckende Schwenkachse (82) in eine Aufschwenkposition (43, 86) bringbar ist, in welcher sie sich mit ihrer Ösen-Öffnungsfläche (25) derart quer zur Vertikalen erstreckt, dass das Eingriffstück (17) des zu transportierenden Objekts vertikal durch die Ösen-Öffnungsfläche (25) hindurch in die Hänge-Öse (13) einsetzbar ist.

3. Rollläufer (1) nach Anspruch 1 oder 2, wobei der Aufhängerkorpus (9) einen sich auf der einen Rollenseite (11) nach unten erstreckenden ersten Steg (27), einen sich ausgehend vom ersten Steg (27) quer zu diesem von der einen Rollenseite (11) zu der anderen Rollenseite (29) erstreckenden zweiten Steg (31), einen sich ausgehend von dem zweiten Steg (31) quer zu diesem nach unten erstreckenden dritten Steg (33) und einen sich ausgehend von dem dritten Steg (33) quer zu diesem von der anderen Rollenseite (29) zu der einen Rollenseite (11) erstreckenden vierten Steg (35) aufweist, wobei die Hänge-Öse im vierten Steg ausgebildet ist.

4. Rollläufer (1) nach Anspruch 3, wobei der vierte Steg (35) im Schnitt quer zur Rollenachseachse (7) eine V- oder U-Form aufweist.

5. Rollläufer (1) nach Anspruch 1 oder 2, wobei der Aufhängerkorpus (9) einen sich auf der einen Rollenseite (11) nach unten erstreckenden ersten Steg (27), einen sich ausgehend vom ersten Steg (27) quer zu diesem von der einen Rollenseite (11) zu der anderen Rollenseite (29) erstreckenden zweiten Steg (31) und einen sich ausgehend von dem zweiten Steg (31) quer zu diesem nach unten erstreckenden dritten Steg (33) aufweist, wobei die Hänge-Öse (13) im dritten Steg ausgebildet ist.

6. Rollläufer (1) nach einem der Ansprüche 1 bis 5, wobei die Hänge-Öse (13) einen Haltebügelabschnitt (15) aufweist, an welchen das Eingriffstück (17) angehängt werden kann und welcher unter der Rolle (5) zu dieser fluchtend positioniert oder positionierbar ist.

7. Rollläufer (1) nach einem der Ansprüche 1 bis 6, wobei der Mitnahmeabschnitt (19) an seinen beiden Längsenden oben jeweils abgeschrägt oder abgerundet ist.

8. Rollläufer (1) zum hängenden Transport eines Objekts (3) nach Anspruch 1,
wobei
- die Hänge-Öse (13) von einem Hakenelement (53) definiert wird, welches einen Zugang zur Hänge-Öse (13) in Richtung parallel zu deren Ösen-Öffnungsfläche erlaubt und welches relativ zur Rollenachse (7) entweder
- parallel zur Ösen-Öffnungsfläche um eine sich in Transportrichtung (A) des Rollläufers (1) quer zur Rollenachse (7) erstreckende Schwenkachse (55) nach unten in eine Entladungsposition und nach oben in eine Beladungsposition schwenkbar oder
- quer zur Ösen-Öffnungsfläche um eine sich quer zur Transportrichtung (A) in etwa parallel zur Rollenachse (7) erstreckende Drehachse (63) nach unten in eine Entladungsposition und nach oben in eine Beladungsposition drehbar ist.

9. Hängeförderanlage mit
- Führungsschienen (23),
- einer Mehrzahl von Rollläufern (1) nach einem der Ansprüche 1 bis 8, die auf den Führungsschienen (23) rollend gelagert sind, und
- einer Mitnehmervorrichtung, von welcher die Rollläufer (1) entlang den Führungsschienen (23) durch Angreifen an dem Mitnahmeabschnitt (19) des jeweiligen Rollläufers (1) mitnehmbar sind.

10. Hängeförderanlage gemäß Anspruch 9, wobei die Führungsschienen (23) einen zur Seite hin offenen Führungskanal aufweisen, und wobei die Rollläufer (1) mit ihrer Rolle (5) seitlich in den Führungskanal der Führungsschienen (23) eingreifen.

11. Hängeförderanlage gemäß Anspruch 9 oder 10, ferner mit einer Anhäng- und/oder Abhängeinrichtung (70) zum Anhängen und/oder Abhängen von Objekten (3) an und/oder von Rollläufern (1), welche aufweist ein um eine Rotationsachse (72) drehbares Rotationsteil (74), an welchem ein oder mehrere in Umfangsrichtung des Rotationsteils (74) im Winkelabstand voneinander angeordnete Aufnahmeteile (76) über eine Gelenkachse (78) gelenkig angebracht ist/sind, welches/welche mit dem Rotationsteil (74) mitrotiert/mitrotieren und dessen/deren Gelenkachse (78) parallel zur Rotationsachse (72) des Rotationsteils (74) verläuft und in welchem/welchen jeweils ein jeweiliger Rollläufer (1) derart aufnehmbar ist, dass der jeweilige Rollläufer (1) bezüglich der Gelenkachse (78) und der Rotationsachse (72) relativ zu dem jeweiligen Aufnahmeteil (74) im Wesentlichen drehfest ist, einer stationären Kurvenführung (80), in welche ein am Aufnahmeteil (74) oder am Rollläufer (1) ausgebildetes Eingriffsteil (82) bei der Rotation des Rotationsteils (74) eingreifen kann, um das jeweilige Aufnahmeteil (76) mit dem jeweiligen darin aufgenommenen Rollläufer (1) relativ zum Rotationsteil (74) in eine Aufschwenkposition (86) zu schwenken, in welcher das anzuhängende Objekt (3) mit seinem Eingriffstück (17) in Eingriff mit der Hänge-Öse (13) bringbar ist.

12. Verfahren zum Anhängen eines Eingriffstücks (17) eines Objekts (3) an einen Rollläufer (1) gemäß einem der Ansprüche 1 bis 7, wobei der Aufhängerkorpus (9) zusammen mit der Rollenachse (7) von einer vertikalen Transportposition (84) aus um eine sich in Transportrichtung (A) des Rollläufers (1) quer zur Rollenachse (7) erstreckende Schwenkachse (82) um einen Winkel in eine Aufschwenkposition (86) aufgeschwenkt wird, das Objekt (3) mit seinem Eingriffstück (17) in Eingriff mit der Hänge-Öse (13) des sich in der Aufschwenkposition (86) befindlichen Aufhängerkorpus (9) gebracht wird und der Aufhängerkorpus (9) von seiner Aufschwenkposition (86) um die Schwenkachse zurück in seine vertikale Transportposition (84) geschwenkt wird.

## Claims

1. Trolley (1) for the overhead transport of an object (3), having:
- a rotatable roller (5) having a roller shaft (7) and
- a suspension member (9) which is secured at only one side from a roller side (11) to a roller shaft, which is formed by the roller shaft (7) of the rotatable roller (5), and which has below the roller (5) a suspension eyelet (13) in which an engagement piece (17) of an object (3) to be transported can engage in order to suspend the object (3) to be transported on the trolley (9), and which has a carrier portion (19) with which a carrier (21) of a carrier device can engage in order to carry the trolley (1) which is supported so as to roll on a guide rail (23) along the guide rail (23), the carrier portion (19) of the suspension member (9) being constructed in an elongate manner and extending with the longitudinal direction thereof above the roller (5),
**characterised in that**
the carrier portion (19) of the suspension member (9) extends with the longitudinal direction thereof above the roller (5) from one roller side (11) beyond the roller (5) to the other roller side (29).

2. Trolley (1) for the overhead transport of an object (3) according to claim 1, wherein
- the suspension eyelet (13) extends with the eyelet opening face (25) thereof transversely relative to the vertical in such a manner that the engagement piece (17) of the object (3) to be transported can be inserted vertically through the eyelet opening face into the suspension eyelet (13), or wherein
- the suspension eyelet (13) can be moved relative to the roller shaft (7) of the roller (5) about a pivot axis (82) which extends transversely relative to the roller shaft (7) in a transport direction (A) of the trolley (1) into a position (43, 86) for pivoting upwards in which it extends with the eyelet opening face (25) thereof transversely relative to the vertical in such a manner that the engagement piece (17) of the object to be transported can be inserted vertically through the eyelet opening face (25) into the suspension eyelet (13).

3. Trolley (1) according to claim 1 or claim 2, wherein the suspension member (9) has a first web (27) which extends downwards at one roller side (11), a second web (31) which extends from the first web (27) transversely relative thereto from one roller side (11) to the other roller side (29), a third web (33) which extends from the second web (31) transversely relative thereto in a downward direction and a fourth web (35) which extends from the third web (33) transversely relative thereto from the other roller side (29) to the first roller side (11), the suspension eyelet being formed in the fourth web.

4. Trolley (1) according to claim 3, wherein the fourth web (35) has a V-shape or U-shape in cross-section relative to the roller shaft (7).

5. Trolley (1) according to claim 1 or claim 2, wherein the suspension member (9) has a first web (27) which extends downwards at one roller side (11), a second web (31) which extends from the first web (27) transversely relative thereto from one roller side (11) to the other roller side (29), and a third web (33) which extends from the second web (31) transversely relative thereto in a downward direction, the suspension eyelet (13) being formed in the third web.

6. Trolley (1) according to any one of claims 1 to 5, wherein the suspension eyelet (13) has a curved retention portion (15) on which the engagement piece (17) can be suspended and which is positioned or can be positioned below the roller (5) in alignment therewith.

7. Trolley (1) according to any one of claims 1 to 6, wherein the carrier portion (19) is chamfered or rounded in the upper portion at the two longitudinal ends thereof.

8. Trolley (1) for the overhead transport of an object (3) according to claim 1, wherein:
- the suspension eyelet (13) is defined by a hook element (53) which allows access to the suspension eyelet (13) in a direction parallel with the eyelet opening face thereof and which, relative to the roller shaft (7), either
- can be pivoted parallel with the eyelet opening face about a pivot axis (55) which extends in the transport direction (A) of the trolley (1) transversely relative to the roller shaft (7), downwards into an unloading position and upwards into a loading position, or
- can be rotated transversely relative to the eyelet opening face about a rotation axis (63) which extends transversely relative to the transport direction (A) substantially parallel with the roller shaft (7) downwards into an unloading position and upwards into a loading position.

9. Overhead conveying assembly having
- guide rails (23),
- a plurality of trolleys (1) according to any one of claims 1 to 8, which are supported so as to roll on the guide rails (23), and
- a carrier device, by means of which the trolleys (1) can be carried along the guide rails (23) by means of engagement on the carrier portion (19) of the respective trolley (1).

10. Overhead conveying assembly according to claim 9, wherein the guide rails (23) have a guide channel which is open towards the side, and the trolleys (1) engage with the roller (5) thereof laterally in the guide channel of the guide rails (23).

11. Overhead conveying assembly according to claim 9 or claim 10, further having a suspension and/or disengagement device (70) for suspending and/or disengaging objects (3) on and/or from trolleys (1), which has a rotatable rotation portion (74) which can be rotated about a rotation shaft (72) and to which there is/are fitted in an articulated manner by means of an articulation shaft (78) one or more receiving portions (76) which is/are arranged with angular spacing from each other in the peripheral direction of the rotation portion (74) and which rotate(s) with the rotation portion (74) and whose articulation shaft (78) extends parallel with the rotation shaft (72) of the rotation portion (74) and in which a respective trolley (1) can be received in such a manner that the respective trolley (1) is substantially rotationally secure relative to the receiving portion (74) with respect to the articulation shaft (78) and the rotation shaft (72), and having a stationary curve guide (80) in which an engagement member (82) which is formed on the receiving portion (74) or on the trolley (1) can engage when the receiving portion (74) is rotated in order to pivot the respective receiving portion (76) with the respective trolley (1) received therein relative to the rotation portion (74) into a position (86) for pivoting upwards, in which the object (3) to be suspended can be brought into engagement with the suspension eyelet (13) with the engagement piece (17) thereof.

12. Method for suspending an engagement piece (17) of an object (3) on a trolley (1) according to any one of claims 1 to 7, wherein the suspension member (9) together with the roller shaft (7) is pivoted upwards from a vertical transport position (84) about a pivot axis (82) which extends in the transport direction (A) of the trolley (1) transversely relative to the roller shaft (7) through an angle into a position (86) for pivoting upwards, the object (3) is brought by means of the engagement piece (17) thereof into engagement with the suspension eyelet (13) of the suspension member (9) located in the position (86) for pivoting upwards and the suspension member (9) is pivoted from the position (86) for pivoting upwards about the pivot axis back into the vertical transport position (84) thereof.

## Revendications

1. Curseur à roulette (1) pour le convoyage d'un objet (3) en suspension, comportant
- une roulette mobile (5) avec un axe (7) de roulette et
- un corps de suspension (9), qui n'est fixé contre un axe de roulette formé par l'axe (7) de la roulette mobile (5) que sur un côté par rapport à une face (11) de roulette, qui est pourvu d'une anse d'accrochage (13) en dessous de la roulette (5), où peut s'engager une pièce d'accrochage (17) d'un objet (3) à transporter pour suspendre l'objet (3) à transporter au curseur à roulette (9), et qui présente une partie d'entraînement (19) contre laquelle peut s'enclencher un entraîneur (21) d'un dispositif d'entraînement pour entraîner le long d'un rail de guidage (23) le curseur à roulette (1) monté de manière à pouvoir coulisser sur ledit rail de guidage (23), la partie d'entraînement (19) du corps de suspension (9) étant réalisée de manière oblongue et s'étendant au-dessus de la roulette (5) dans le sens de sa longueur,
**caractérisé en ce que**
la partie d'entraînement (19) du corps de suspension (9) s'étend d'une première face (11) de roulette (5) vers une deuxième face (29) de roulette au-dessus de la roulette (5) dans le sens de sa longueur.

2. Curseur à roulette (1) pour le convoyage d'un objet (3) en suspension selon la revendication 1,
dans lequel
- l'anse d'accrochage (13) s'étend avec sa surface d'ouverture d'anse (25) transversalement à la verticale, de telle manière que la pièce d'accrochage (17) de l'objet (3) à transporter peut être mise en place verticalement dans l'anse d'accrochage (13) au travers de la surface d'ouverture d'anse, dans lequel
- l'anse d'accrochage (13) peut être amenée dans une position de basculement (43, 86) par rapport à l'axe (7) de la roulette (5), autour d'un axe de pivotement (82) s'étendant transversalement à l'axe (7) de roulette dans la direction de transport (A) du curseur à roulette (1), où elle s'étend avec sa surface d'ouverture d'anse (25) transversalement à la verticale, de telle manière que la pièce d'accrochage (17) de l'objet à transporter peut être mise en place verticalement dans l'anse d'accrochage (13) au travers de la surface d'ouverture d'anse (25).

3. Curseur à roulette (1) selon la revendication 1 ou 2, dans laquel le corps de suspension (9) comporte une première aile (27) s'étendant vers le bas contre la première face (11) de roulette, une deuxième aile (31) s'étendant à partir de la première aile (27) transversalement à celle-ci, de la première face (11) de roulette à la deuxième face (29) de roulette, une troisième aile (33) s'étendant vers le bas à partir de la deuxième aile (31), transversalement à celle-ci, et une quatrième aile (35) s'étendant à partir de la troisième aile (33) transversalement à celle-ci, de la deuxième face (29) de roulette à la première face (11) de roulette, l'anse d'accrochage étant formée dans la quatrième aile.

4. Curseur à roulette (1) selon la revendication 3, dans lequel la quatrième aile (35) présente une forme en V ou en U dans sa section transversale à l'axe (7) de roulette.

5. Curseur à roulette (1) selon la revendication 1 ou 2, dans lequel le corps de suspension (9) comporte une première aile (27) s'étendant vers le bas contre la première face (11) de roulette, une deuxième aile (31) s'étendant à partir de la première aile (27) transversalement à celle-ci, de la première face (11) de roulette à la deuxième face (29) de roulette, et une troisième aile (33) s'étendant vers le bas à partir de la deuxième aile (31), transversalement à celle-ci, l'anse d'accrochage (13) étant formée dans la troisième aile.

6. Curseur à roulette (1) selon l'une des revendications 1 à 5, dans lequel l'anse d'accrochage (13) comporte une partie en étrier de fixation (15), sur laquelle peut être accrochée la pièce d'accrochage (17) et qui est positionnée ou peut être positionnée sous la roulette (5) en alignement avec celle-ci.

7. Curseur à roulette (1) selon l'une des revendications 1 à 6, dans lequel la partie d'entraînement (19) est chanfreinée ou arrondie à chacune de ses deux extrémités longitudinales sur le haut.

8. Curseur à roulette (1) pour le convoyage d'un objet (3) en suspension selon la revendication 1,
dans lequel
- l'anse d'accrochage (13) est définie par un élément à crochet (53) permettant un accès à l'anse d'accrochage (13) dans la direction parallèle à sa surface d'ouverture d'anse et qui est rotatif par rapport à l'axe (7) de roulette, soit
- parallèlement à la surface d'ouverture d'anse, autour d'un axe de pivotement (55) s'étendant vers le bas vers une position de déchargement, et vers le haut vers une position de chargement, transversalement à l'axe (7) de roulette, dans la direction de transport (A) du curseur à roulette (1), soit
- transversalement à la surface d'ouverture d'anse, autour d'un axe de rotation (63) s'étendant vers le bas vers une position de déchargement, et vers le haut vers une position de chargement, transversalement à la direction de transport (A), sensiblement parallèlement à l'axe (7) de roulette.

9. Convoyeur suspendu, avec
- des rails de guidage (23),
- une pluralité de curseurs à roulette (1) selon l'une des revendications 1 à 8, montés de manière à pouvoir rouler sur les rails de guidage (23), et
- un dispositif d'entraîneur, au moyen duquel les curseurs à roulette (1) sont entraînables le long des rails de guidage (23) par enclenchement contre la partie d'entraînement (19) de chaque curseur à roulette (1).

10. Convoyeur suspendu selon la revendication 9, dans lequel les rails de guidage (23) présentent un canal de guidage ouvert sur le côté, et dans lequel les curseurs à roulette (1) s'engagent latéralement avec leur roulette (5) dans le canal de guidage des rails de guidage (23).

11. Convoyeur suspendu selon la revendication 9 ou 10, avec en outre un dispositif d'accrochage et/ou de décrochage (70) pour l'accrochage d'objets (3) sur des curseurs à roulette (1) et/ou le décrochage d'objets (3) de ceux-ci, lequel comporte une pièce de rotation (74) rotative autour d'un axe de rotation (72) contre lequel une ou plusieurs pièces de réception (76) sont disposées de manière articulée au moyen d'un axe articulé (78), avec un espacement angulaire entre elles dans la direction périphérique de la pièce de rotation (74), ladite ou lesdites pièces de réception étant entraînées en rotation conjointement à la pièce de rotation (74), son axe articulé ou leurs axes articulés (78) s'étendant parallèlement à l'axe de rotation (72) de la pièce de rotation (74) et un curseur à roulette (1) correspondant pouvant y être logé de telle manière que ledit curseur à roulette (1) soit sensiblement entraîné sensiblement solidairement en rotation quant à l'axe articulé (78) et à l'axe de rotation (72) par rapport à la pièce de rotation (74) correspondante, avec un guidage courbe (80) fixe, dans lequel peut s'engager une pièce d'engagement (82) formée sur la pièce de rotation (74) ou le curseur à roulette (1) lors de la rotation de la pièce de rotation (74), pour pivoter vers une position de basculement (86) la pièce de réception (76) correspondante avec le curseur à roulette (1) qui y est logé par rapport à la pièce de rotation (74), position dans laquelle l'objet (3) à accrocher peut être amené en prise avec l'anse d'accrochage (13) par sa pièce d'accrochage (17).

12. Procédé d'accrochage d'une pièce d'accrochage (17) d'un objet (3) sur un curseur à roulette (1) selon l'une des revendications 1 à 7, dans lequel le corps de suspension (9) est pivoté suivant un angle avec l'axe (7) de roulette, d'une position de transport (84) verticale vers une position de basculement (86) autour d'un axe de pivotement (82) s'étendant transversalement à l'axe (7) de roulette dans la direction de transport (A) du curseur à roulette (1), l'objet (3) étant amené en prise avec l'anse d'accrochage (13) du corps de suspension (9) se trouvant en position de basculement (86) par sa pièce d'accrochage (17), et le corps de suspension (9) étant ramené par pivotement autour de l'axe de pivotement, de sa position de basculement (86) vers sa position de transport (84) verticale.
